# EUROPEAN PATENT SPECIFICATION

(11) **EP 2 509 169 B1**
(45) Date of publication and mention of the grant of the patent: **18.10.2017**
(21) Application number: 12001650.6
(22) Date of filing: 09.03.2012
(51) Int. Cl.: B60L 11/18, H01R 13/52

(54) **Vehicle-side connector**
Fahrzeugseitenstecker
Connecteur latéral de véhicule

(30) Priority: 05.04.2011 JP 2011083479
(43) Date of publication of application: 10.10.2012
(73) Proprietor: Sumitomo Wiring Systems, Ltd., Yokkaichi-city Mie 510-8503 (JP)
(72) Inventor: Osawa, Kiyoshi, Yokkaichi-city Mie 510-8503 (JP)
(74) Representative: Müller-Boré & Partner Patentanwälte PartG mbB

(56) References cited:
- JP-A- 7 029 631
- US-A- 4 793 819
- US-A- 5 800 188
- US-A1- 2008 268 706

## Description

The present invention relates to a vehicle-side connector to be connected to a charging connector in charging.

A connector disclosed in Japanese Unexamined Patent Publication No. H07-29631 is, for example, known as a vehicle-side connector housed in a housing chamber provided on the outer surface of a vehicle. A drainage path for draining rainwater having entered the housing chamber and moisture adhering to the wall surface of the housing chamber is provided in the housing chamber housing this vehicle-side connector.

A vehicle-side connector of this type includes a connecting portion connectable to a charging connector and a mounting piece provided on a vehicle-side end of this connecting portion and to be fixed to a vehicle, and the connecting portion is provided with an engaging portion engageable with a lock portion provided on the charging connector in a connecting direction. For exmaple, the engaging portion is arranged between a pair of protection walls extending from the mounting piece and protected from external interference.

For example, if the lock portion is arranged on the top of the connecting portion, water in the housing chamber can be drained from the drainage path, but water stays in the inner space of a recess enclosed by the mounting piece, the both protection walls and the lock portion if it rains or snows with the vehicle-side connector and the charging connector locked into each other. Further, if a temperature drops with a lock claw immersed in the water in the recess, the pooled water may be frozen and it may become difficult to disengage the lock portion and the lock claw. Thus, it is being studied to provide a water drainage hole penetrating through the mounting piece toward the vehicle and discharge water pooled in the recess to the outside after bringing the water into the vehicle interior, thereby discharging the water having flowed into the recess. However, if the water is brought into the vehicle interior through the water drainage hole, it is necessary to take a measure against water leakage in the vehicle interior and secure a discharge path for discharging water from the vehicle interior to the outside.

Document US 5,800,188 discloses an interconnector for connecting the electrical circuits of a tow vehicle with similar circuits of a trailer in which a one-piece shell socket accepts a standard trailer plug at one end and is compatible with the fitting of a tow vehicle harness at the other end. Pass-through conductors form terminals compatible with those of the trailer plug and also with those of the vehicle harness fitting. A cover is provided with a springloaded floating hinge to permit flat sealing protecting the interconnector from environmental hazards, and a flushing passage is formed through the cover to remove debris from the floating hinge.

The present invention was completed in view of the above situation and an object thereof is to properly improve operability of a vehicle-side connector.

This object is solved according to the invention by the features of the independent claims. Particular embodiments of the invention are subject of the dependent claims.

Accordingly, operability is improved by allowing discharge of water flowing into a recess formed on the top of a connecting portion to the outside without bringing it into a vehicle interior.

According to the invention, there is provided a vehicle-side connector to be connected to a charging connector in charging a battery of a vehicle, comprising: a connecting portion which is connectable to the charging connector; a mounting portion which is provided to partition between the connecting portion and the vehicle and to be fixed to the vehicle; a recess which is open outward and provided on the connecting portion; and at least one water drainage path which is formed in an inner surface of the recess without penetrating through the mounting portion. Furthermore, according to the invention, the recess is open upward and provided on or near the top of the connecting portion.

According to a particular embodiment, there is provided a vehicle-side connector to be connected to a charging connector in charging a battery of a vehicle, comprising a connecting portion which is connectable to the charging connector; a mounting portion which is provided to partition between the connecting portion and the vehicle and to be fixed to the vehicle; a recess which is open upward and provided on the top of the connecting portion; and a water drainage path which is formed in an inner surface of the recess without penetrating through the mounting portion.

According to the thus constructed vehicle-side connector, water having flowed into the recess, for example, due to showering rain can be discharged to the outside through the water drainage path. This can suppress the pooling of water in the recess. Further, since the water drainage path is provided without penetrating through the mounting portion, water having flowed into the recess can be discharged to the outside without being brought into the vehicle interior. This can make it unnecessary to take a measure against water leakage in the vehicle interior and secure a discharge path.

The present invention may be embodied as follows.

A plurality of water drainage paths may be provided.

According to this configuration, since the plurality of water drainage paths are provided, water having flowed into the recess can be quickly discharged to the outside.

A pair of side walls extending to cross a surface of the mounting portion substantially facing the connecting portion may be formed on the connecting portion, particularly on the top of the connecting portion.

Surfaces of the both side walls facing each other may be respectively inner surfaces of the recess.

The water drainage paths may be respectively formed at ends of the side walls substantially facing the mounting portion.

Since the vehicle-side connector of this type is mounted on the vehicle in a somewhat upward facing posture, water having flowed into the recess is collected at a side of the recess facing the mounting portion. Thus, according to this configuration, the water flowed into the recess can be quickly discharged to the outside in two directions without being pooled in the recess.

The connecting portion may be formed with an engaging portion which is located between the pair of side walls and engageable with a lock portion provided on the charging connector in a connecting direction and projects from the upper or outer surface of the connecting portion.

The bottom surface of the recess may be arranged at such a position that the lock portion comes into contact therewith when the lock portion and the engaging portion are engaged; and/or at least one recessed groove slightly lower than the bottom surface of the recess may be formed at or near the water drainage paths and an end of the recess particularly substantially facing the mounting portion.

In the case of mounting the vehicle-side connector on the vehicle in a somewhat upward facing posture, the contact of water with the lock portion and the engaging portion can be suppressed even if a little water stays in the recess by making the spacing between the mounting portion and the engaging portion longer. However, such a configuration makes the length of the connecting portion in the connecting direction longer and enlarges the vehicle-side connector in the connecting direction. In this respect, according to the above configuration, water having flowed into the recess can be allowed to flow to the recessed groove even if the length of the connecting portion in the connecting direction is made shorter. Thus, the contact of water with the lock portion and the engaging portion can be suppressed. In this way, as compared with the case where no recessed groove is formed, it is possible to suppress a situation where it becomes difficult to disengage the lock portion and the engaging portion due to the freezing of water in the recess.

At least one side wall extending to cross a surface of the mounting portion substantially facing the connecting portion may be formed on the connecting portion.

The drainage path is defined by a front surface of the mounting portion, a rear end surface of the protection wall and an outer surface of the receptacle.

The water drainage path is formed substantially over the entire height of the protection wall.

A depth of the recess may be set to be substantially equal to a projecting distance of the engaging portion from the distal end of the receptacle, and/or wherein a bottom surface of the recess may be located at such a position that a distal end of a tip portion of a lock portion provided on the charging connector substantially comes into contact therewith.

At least one positioning recess projecting radially outward may be provided at the connecting portion, particularly in a position substantially opposite to that of the recess and/or of the engaging portion.

According to the above, it is possible to discharge water flowing into a recess formed on the top of a connecting portion to the outside without bringing it into a vehicle interior.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a perspective view of a vehicle-side connector,
FIG. 2 is a front view of the vehicle-side connector,
FIG. 3 is a plan view of the vehicle-side connector,
FIG. 4 is a side view of the vehicle-side connector, and
FIG. 5 is a section along V-V of FIG. 2.

### <Embodiment>

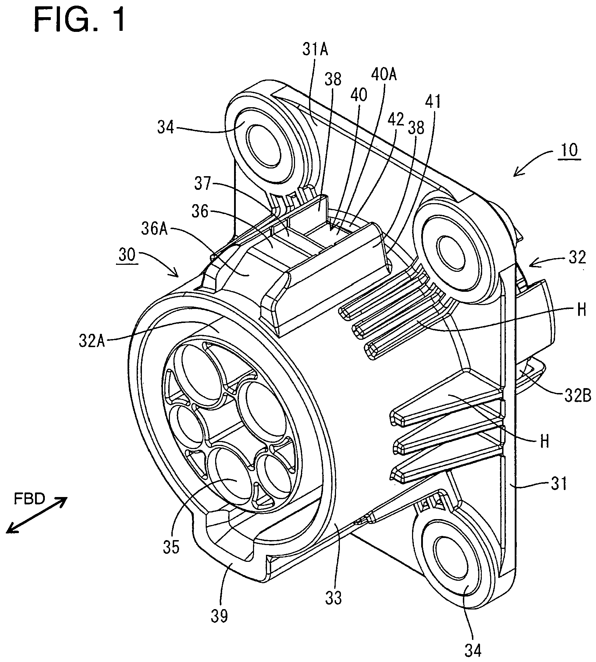

One specific embodiment of the present invention is described with reference to FIGS. 1 to 5.

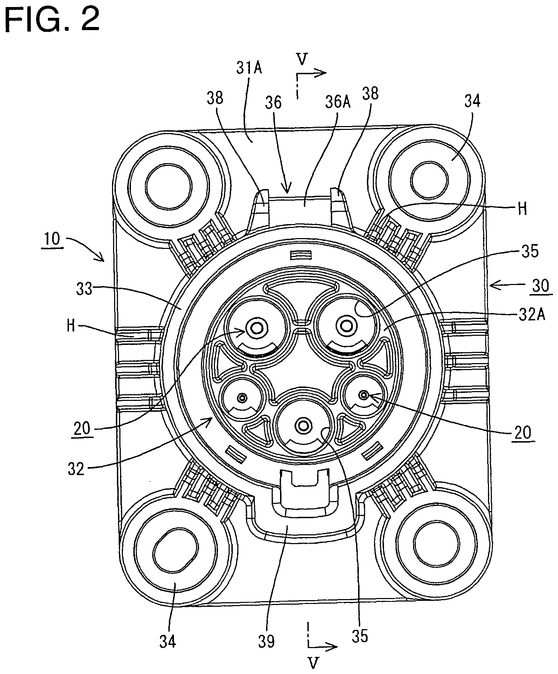

As shown in FIGS. 1 and 2, a vehicle-side connector 10 of this embodiment includes one or more, particularly a plurality of (five in this embodiment) vehicle-side terminal fittings 20 and a connector housing 30 made e.g. of synthetic resin. This vehicle-side connector 10 is to be fixed to a vehicle B and an unillustrated charging connector is connectable to the connector housing 30 from front.

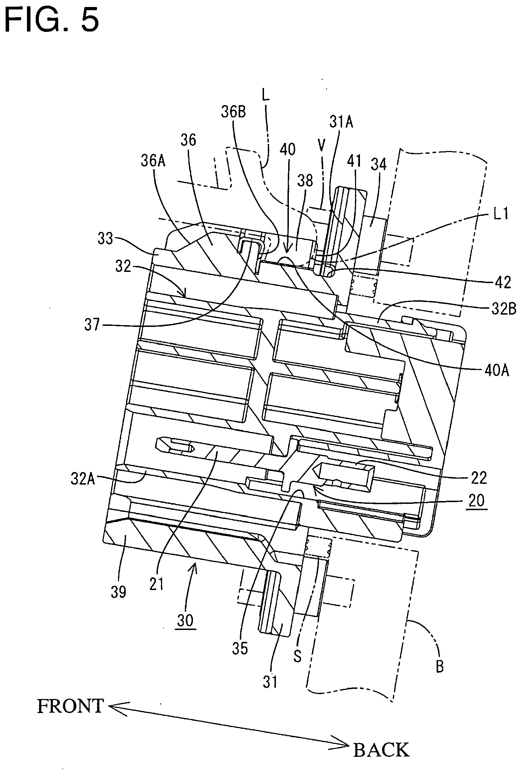

As shown in FIG. 5, the vehicle-side terminal fitting 20 includes a terminal connecting portion 21 (particularly substantially in the form of a round pin) and a wire connecting portion 22 to be connected to an unillustrated wire. The terminal connecting portion 21 is to be electrically conductively connected to a charging-side terminal fitting provided in the charging connector when the charging connector is connected to the connector housing 30.

The connector housing 30 includes a mounting portion 31 (particularly substantially in the form of a substantially rectangular or polygonal flat plate or flange), a (particularly substantially cylindrical or tubular) terminal accommodating portion 32 penetrating through this mounting portion 31 in forward and backward directions FBD, and a (particularly substantially cylindrical or tubular) receptacle (as an example of a "connecting portion") 33 provided at least partly around the terminal accommodating portion 32.

As shown in FIGS. 1 and 5, one or more collars 34 are to be connected (particularly respectively press-fitted) at one or more positions (e.g. at four corners) of the mounting portion 31, and the connector housing 30 is to be fixed to the vehicle by inserting one or more respective fixing bolts V into these one or more collars 34 and tightening them into the vehicle B. Note that a seal member such as (particularly substantially annular surface) seal S is to be mounted on (particularly an outer peripheral edge portion of) the terminal accommodating portion 32 between the vehicle B and the rear surface of the mounting portion 31. This seal member, particularly this (particularly surface) seal S, is to be brought into close contact with the vehicle B and the rear surface of the mounting portion 31, thereby providing fluid- or waterproofing lest fluid or water should enter the terminal accommodating portion 32 through a clearance between the vehicle B and the mounting portion 31.

The terminal accommodating portion 32 includes a forward projecting portion 32A substantially projecting forward from the mounting portion 31 and/or a backward projecting portion 32B substantially projecting backward from the mounting portion 31. Further, one or more, particularly a plurality of (five in this embodiment) cavities 35 are formed to penetrate through the terminal accommodating portion 32 substantially in forward and backward directions FBD, and the one or more respective vehicle-side terminal fittings 20 are to be held in or positioned or at least partly inserted into the cavities 35.

As shown in FIGS. 1 and 5, the receptacle 33 particularly is at least partly arranged around the forward projecting portion 32A of the terminal accommodating portion 32, and/or substantially extends from a front surface 31A of the mounting portion 31 towards or to the front end surface of the forward projecting portion 32A. That is, the mounting portion 31 particularly is formed to partition between the receptacle 33 and the vehicle B. The unillustrated charging connector at least partly is fittable or insertable into the receptacle 33, and a charging-side receptacle provided on the charging connector at least partly is fitted or insertable into a space between the receptacle 33 and the forward projecting portion 32A as the charging connector is fitted into the receptacle 33.

As shown in FIGS. 1 and 2, at least one lock projection (as an example of an "engaging portion") 36 (particularly substantially in the form of a block projecting upward or outward and/or substantially long in forward and backward directions FBD) is provided on (particularly the top or an outside portion of) the receptacle 33. As shown in FIG. 5, this lock projection 36 has an inclined surface 36A directed away from the receptacle 33 toward the back side and/or substantially extends backward from the rear end of this inclined surface 36A and then substantially extends perpendicularly toward the outer surface of the receptacle 33.

A surface of the lock projection 36 extending toward the outer surface of the receptacle 33 particularly serves as a locking surface 36B, and a locking piece 37 (particularly made of metal) is mounted on this locking surface 36B to at least partly cover a rear part of the lock projection 36. When the receptacle 33 at least partly is fitted or inserted into the charging-side receptacle, a lock claw (as an example of a "lock portion") L (particularly made of metal) and provided on the charging connector is pushed up or awy from the receptacle 33 by the inclined surface 36A. When the receptacle 33 and the charging-side receptacle substantially reach a properly fitted state, the lock claw L and the locking piece 37 of the lock projection 36 are engaged in forward and backward directions FBD, whereby the receptacle 33 and the charging-side receptacle are held in the fitted state.

As shown in FIGS. 1 and 2, one or more, particularly a pair of protection walls (as an example of one or more side walls) 38, 38 standing upward from (particularly the upper or distal end of) the receptacle 33 are formed adjacent to the lock projection 36, particularly to substantially face each other on the opposite lateral (left and right) sides of the lock projection 36. These one or more, particularly this pair of protection walls 38, 38 substantially extend backward from a position before the lock projection 36 toward the mounting portion 31 located behind and protect the lock projection 36 from external interference in a lateral direction.

When the lock claw L and the locking piece 37 of the lock projection 36 are engaged in forward and backward directions FBD, a tip portion L1 of the lock claw L is at least partly accommodated in a recess 40 particularly substantially in a manner enclosed at four sides by the front surface 31A of the mounting portion 31, the locking surface 36B of the lock projection 36 (locking piece 37), and the inner surfaces of the both protection walls 38, 38 substantially facing each other.

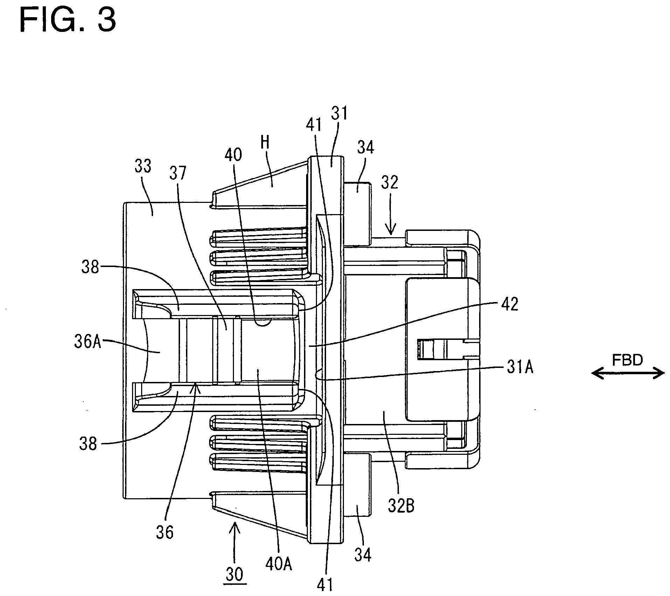

As shown in FIGS. 3 and 5, this recess 40 is open upward or outward or radially, particularly has a substantially rectangular plan view, and is recessed downward or radially inward. Further, the depth of the recess 40 particularly is set to be substantially equal to a projecting distance of the lock projection 36 from the upper end of the receptacle 33, and/or a bottom surface 40A of the recess 40 is located at such a position that the lower end of the tip portion L1 of the lock claw L substantially comes into contact therewith as shown in FIG. 5.

On the other hand, at least one positioning recess 39 projecting radially outward (e.g. downward) is provided in (particularly a lower part of) the receptacle 33. This positioning recess 39 functions to guide the charging-side receptacle to a proper fitted position by guiding an unillustrated positioning rib provided on the charging-side receptacle of the charging connector thereinto in connecting the charging connector.

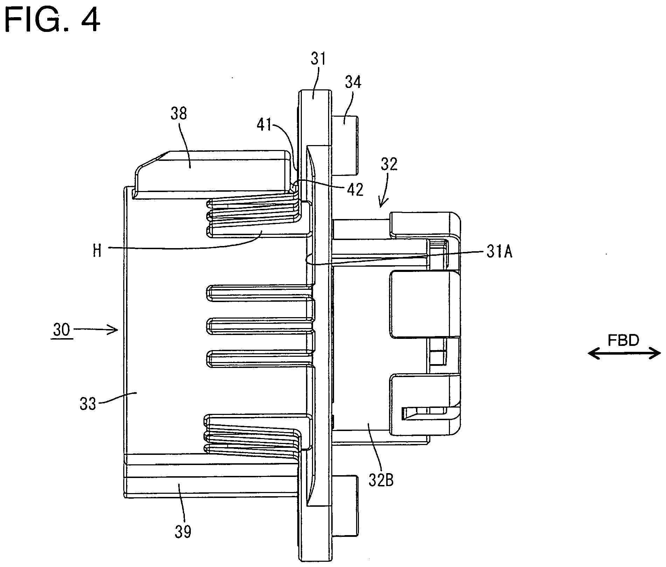

As shown in FIGS. 1 and 4, at least one water drainage path 41 is formed adjacent to the protection wall(s) 38, particularly at an end (particularly of each of the pair) of protection wall(s) 38, 38 substantially facing the mounting portion 31 in this embodiment. The (particularly both) water drainage path(s) 41, 41 particularly is/are open upward or outward and laterally. The (particularly each) water drainage path 41 particularly is defined by the front surface 31A of the mounting portion 31, the rear end surface of the protection wall 38 and the outer surface of the receptacle 33, and/or particularly formed substantially over the entire height of the protection wall 38. That specifically is, the both protection walls 38, 38 and the mounting portion 31 forming the recess 40 substantially are positioned across the water drainage paths 41 from each other.

As shown in FIG. 5, at least one recessed groove 42 slightly lower than the bottom surface 40A of the recess 40 is formed at or near the water drainage paths 41 and/or an end of the recess 40 facing the mounting portion 31. Further, the recessed groove 42 provided in the recess 40 is formed to substantially be straight between the water drainage paths 41, 41, and/or arranged at a position behind the tip portion L1 of the lock claw L and/or before the front surface 31A of the mounting portion 31 with the lock claw L and/or the locking piece 37 of the lock projection 36 engaged in forward and backward directions FBD.

On the other hand, the rear end surface(s) of the (both) protection wall(s) 38, 38 particularly is/are arranged at position(s) to be substantially flush with the tip of the lock claw L with the lock claw L and the locking piece 37 of the lock projection 36 engaged in forward and backward directions FBD and/or the lock claw L engaged with the lock projection 36 is protected from external interference in the lateral direction by the (particularly both) protection wall(s) 38, 38.

The vehicle-side connector 10 of this embodiment is configured as described above. Next, functions and effects thereof are described.

As shown in FIG. 5, the vehicle-side connector 10 of this embodiment is to be fixed to the vehicle B particularly in such an upward facing posture that the receptacle 33 and the forward projecting portion 32A are facing somewhat upward. In charging, the charging connector is connected from front and charging is performed with the vehicle-side connector 10 and the charging connector locked into each other by the lock projection 36 and the lock claw L.

If it e.g. rains or snows during this charging, water adhering to the lock projection 36 and the inner surfaces of the protection walls 38 may flow into the recess 40 along the lock projection 36 and the protection wall(s) 38. However, since the water having flowed into the recess 40 can be quickly discharged to the outside through the (particularly both) water drainage path(s) 41, 41 provided at the ends of the both protection walls 38, 38 according to this embodiment, it can be suppressed that the water stays in the recess 40.

Since the vehicle-side connector 10 is to be mounted on the vehicle particularly in a somewhat upward facing posture, water having flowed into the recess 40 is collected at the rear side (side facing the mounting portion 31). However, since the water drainage path(s) 41 particularly is/are provided at the end(s) of the protection wall(s) 38 facing the mounting portion 31 in this embodiment, water having flowed into the recess 40 can be discharged without any left in the recess 40, for example, as compared with the case where water drainage paths are formed in central parts of the protection walls 38 in forward and backward directions.

In the case of particularly mounting the vehicle-side connector 10 on the vehicle in a somewhat upward facing posture, it is thought to provide a water drainage hole penetrating through the mounting portion 31 toward the vehicle and discharge water having flowed into the recess 40 to the outside after bringing the water into the vehicle interior. However, if water is brought into the vehicle interior through the water drainage hole, it is necessary to take a measure against water leakage in the vehicle interior and secure a discharge path for discharging water from the vehicle interior to the outside. In this respect, water in the recess 40 can be discharged without being brought into the vehicle interior according to this embodiment, wherefore it can be made unnecessary to take the measure against water leakage in the vehicle interior and secure the discharge path.

Further, even if the water drainage path(s) 41 is/are provided in the recess 40, a little water may remain on the bottom surface 40A of the recess 40. If the lock projection 36 and the lock claw L are engaged with a little water remaining in the recess 40, the lock projection 36 and the lock claw L are in contact with the water in the recess 40. If an air temperature drops below freezing in this state, the lock projection 36 and the lock claw L may be frozen and it may become difficult to release the locked state. As a countermeasure to this, it is thought to avoid the contact of water with the lock projection 36 and the lock claw L even if a little water remains in the recess 40 by making the spacing between the mounting portion 31 and the lock projection 36 in forward and backward directions FBD longer. However, the elongation of the spacing between the mounting portion 31 and the lock projection 36 in forward and backward directions FBD leads to the elongation of the receptacle 33 in forward and backward directions FBD, which results in the enlargement of the vehicle-side connector 10 in forward and backward directions.

In this respect, according to this embodiment, the at least one recessed groove 42 slightly lower than the bottom surface 40A of the recess 40 particularly is formed at the water drainage paths 41 and the end of the recess 40 facing the mounting portion 31. Thus, even if the length of the receptacle 33 in forward and backward directions FBD is made shorter, a little water remaining in the recess 40 can be allowed to flow into the at least one recessed groove 42. Further, since the recessed groove 42 particularly is arranged behind the lock claw L engaged with the lock projection 36, the lock claw L does not touch the water having flowed into the recessed groove 42. In this way, as compared with the case where the recessed groove 42 is not formed, it is possible to suppress the contact of water with the lock projection 36 and the lock claw L and suppress a situation where water in the recess 40 is frozen to make it difficult to disengage the lock projection 36 and the lock claw L.

Accordingly, to suppress the pooling of water in a recess formed on the top of the connecting portion, a vehicle-side connector 10 to be connected to a charging connector in charging a battery of a vehicle includes a receptacle 33 which is connectable to the charging connector, a mounting portion 31 which is provided to partition between the receptacle 33 and a vehicle B and to be fixed to the vehicle B, a recess 40 which is open upward or laterally or outward and provided on the connecting portion 33, particularly on or near the top of the connecting portion 33, and one or more water drainage paths 41 formed in inner surfaces of the recess 40 without penetrating through the mounting portion 31.

### <Other Embodiments>

The present invention is not limited to the above described and illustrated embodiment. For example, the following embodiments are also included in the technical scope of the present invention.
(1) Although the inner surfaces of the recess 40 are partly formed by the surface(s) of the one or more protection walls 38, 38, particularly of the pair of protection walls 38, 38 substantially facing each other, and the rear surface of the lock projection 36 in the above embodiment, the present invention is not limited to such a mode. For example, the inner surfaces of the recess 40 may be partly formed by side surfaces of reinforcing walls H or the like provided from the mounting portion 31 to the receptacle 33.
(2) Although the water drainage paths 41 are provided at the ends of the protection walls 38 in the above embodiment, the present invention is not limited to such a mode. For example, water drainage paths may be provided at intermediate or central positions of the protection walls 38 in forward and backward directions FBD.
(3) Although one water drainage path 41 is provided at (particularly each of the both) protection wall(s) 38 in the above embodiment, the present invention is not limited to such a mode. For example, the water drainage path may be formed only at one protection wall 38 or a plurality of water drainage paths may be provided at each of the protection walls 38.
(4) Although the water drainage paths 41 are provided at the both protection walls 38 in the above embodiment, the present invention is not limited to such a mode. For example, water drainage paths may be provided at the receptacle 33 or the lock projection 36.
(5) Although the recess 40 is provided on the top of the receptacle 33 in the above embodiment, the present invention is not limited to such a mode and may be applied, for example, to a recess provided on the top of the terminal accommodating portion 32 including no receptacle 33.
(6) Although the receptacle 33 has a cylindrical shape in the above embodiment, the present invention is not limited to such a mode and may be applied, for example, to a receptacle in the form of a rectangular tube.

### LIST OF REFERENCE SIGNS

- 10:: vehicle-side connector
- 31:: mounting portion
- 33:: receptacle (connecting portion)
- 36:: lock projection (engaging portion)
- 38:: protection wall (side wall)
- 40:: recess
- 41:: water drainage path
- 42:: recessed groove
- L:: lock claw (lock portion)

## Claims

1. A vehicle-side connector (10) to be connected to a charging connector in charging a battery of a vehicle (B), comprising:
a connecting portion (33) which is connectable to the charging connector;
a mounting portion (31) which is provided to partition between the connecting portion (33) and the vehicle (B) and to be fixed to the vehicle (B);
a recess (40);
at least one water drainage path (41) which is formed in an inner surface of the recess (40) without penetrating through the mounting portion (31),
**characterized in that** the recess (40) is open outward and upward and is provided on or near the top of the connecting portion (33).

2. A vehicle-side connector according to claim 1, wherein a plurality of water drainage paths (41) are provided.

3. A vehicle-side connector according to any one of the preceding claims,
wherein a pair of side walls (38) extending to cross a surface of the mounting portion (31) substantially facing the connecting portion (33) are formed on the connecting portion (33), particularly on the top thereof.

4. A vehicle-side connector according to claim 3, wherein surfaces of the both side walls (38) substantially facing each other are respectively inner surfaces of the recess (40).

5. A vehicle-side connector according to claim 3 or 4, wherein the water drainage paths (41) are respectively formed at ends of the side walls (38) substantially facing the mounting portion (31).

6. A vehicle-side connector according to any one of the preceding claims 4 to 6, wherein the connecting portion (33) is formed with an engaging portion (36) which is located between the pair of side walls (38) and engageable with a lock portion (L) provided on the charging connector in a connecting direction and projects from the upper or outer surface of the connecting portion (33).

7. A vehicle-side connector according to claim 6, wherein the bottom surface of the recess (40) is arranged at such a position that the lock portion (L) comes into contact therewith when the lock portion (L) and the engaging portion (36) are engaged; and/or
at least one recessed groove (42) slightly lower than the bottom surface of the recess (40) is formed at or near the water drainage paths (41) and an end of the recess (40) particularly substantially facing the mounting portion (31).

8. A vehicle-side connector according to any one of the preceding claims,
wherein at least one side wall (38) extending to cross a surface of the mounting portion (31) substantially facing the connecting portion (33) is formed on the connecting portion (33).

9. A vehicle-side connector according to claim 8, wherein the water drainage path (41) is defined by a front surface (31 A) of the mounting portion (31), a rear end surface of the protection wall (38) and an outer surface of the receptacle (33).

10. A vehicle-side connector according to claim 8 or 9, wherein the water drainage path (41) is formed substantially over the entire height of the protection wall (38).

11. A vehicle-side connector according to any one of the preceding claims,
wherein a depth of the recess (40) is set to be substantially equal to a projecting distance of the engaging portion (36) from the distal end of the receptacle (33), and/or wherein a bottom surface (40A) of the recess (40) is located at such a position that a distal end of a tip portion (L1) of a lock portion (L) provided on the charging connector substantially comes into contact therewith.

12. A vehicle-side connector according to any one of the preceding claims, wherein at least one positioning recess (39) projecting radially outward is provided at the connecting portion (33), particularly in a position substantially opposite to that of the recess (40) and/or of the engaging portion (36).

## Patentansprüche

1. Fahrzeugseitiger Verbinder (10), der mit einem Ladeverbinder beim Laden einer Batterie eines Fahrzeugs (B) zu verbinden ist, umfassend:
einen Verbindungsabschnitt (33), der mit dem Ladeverbinder verbindbar ist;
einen Montageabschnitt (31), der bereitgestellt ist, zwischen dem Verbindungsabschnitt (33) und dem Fahrzeug (B) zu trennen, und der an dem Fahrzeug (B) zu fixieren bzw. zu befestigen ist;
eine Aussparung (40); und
zumindest einen Wasserabflussweg (41), der in einer inneren Fläche bzw. Oberfläche der Aussparung (40) gebildet ist, ohne den Montageabschnitt (31) zu penetrieren,
**dadurch gekennzeichnet, dass** die Aussparung (40) nach außen und oben offen ist und an oder nahe der Spitze bzw. Oberseite des Verbindungsabschnitts (33) bereitgestellt ist.

2. Fahrzeugseitiger Verbinder nach Anspruch 1, wobei eine Mehrzahl von Wasserabflusswegen (41) bereitgestellt ist.

3. Fahrzeugseitiger Verbinder nach einem der vorhergehenden Ansprüche, wobei ein Paar Seitenwände (38), die sich dahingehend erstrecken, eine Fläche bzw. Oberfläche des Montageabschnitts (31) zu kreuzen, die dem Verbindungsabschnitt (33) im Wesentlichen zugewandt ist, an dem Verbindungsabschnitt (33), insbesondere der Spitze bzw. Oberseite davon gebildet ist.

4. Fahrzeugseitiger Verbinder nach Anspruch 3, wobei Flächen bzw. Oberflächen der beiden Seitenwände (38), die einander im Wesentlichen zugewandt sind, jeweils Innenflächen bzw. -oberflächen der Aussparung (40) sind.

5. Fahrzeugseitiger Verbinder nach Anspruch 3 oder 4, wobei die Wasserabflusswege (41) jeweils an Enden der Seitenwände (38) gebildet sind, die im Wesentlichen dem Montageabschnitt (31) zugewandt sind.

6. Fahrzeugseitiger Verbinder nach einem der vorhergehenden Ansprüche 4 bis 6, wobei der Verbindungsabschnitt (33) mit einem Eingriffsabschnitt (36) gebildet ist, der sich zwischen dem Paar Seitenwände (38) befindet und mit einem Verriegelungsabschnitt (L), der an dem Ladeverbinder bereitgestellt ist, in einer Verbindungsrichtung in Eingriff bringbar ist und von der oberen oder äußeren Fläche bzw. Oberfläche des Verbindungsabschnitts (33) vorsteht.

7. Fahrzeugseitiger Verbinder nach Anspruch 6, wobei die untere Fläche bzw. Oberfläche der Aussparung (40) an solch einer Position angeordnet ist, dass der Verriegelungsabschnitt (L) damit in Kontakt kommt, wenn der Verriegelungsabschnitt (L) und der Eingriffsabschnitt (36) in Eingriff gebracht werden bzw. sind; und/oder
zumindest eine vertiefte Nut bzw. Rille (42) etwas niedriger als die untere Fläche der Aussparung (40) an den oder nahe der Wasserabflusswege (41) und einem Ende der Aussparung (40) gebildet ist, das bzw. die im Wesentlichen dem Montageabschnitt (31) zugewandt ist.

8. Fahrzeugseitiger Verbinder nach einem der vorhergehenden Ansprüche, wobei zumindest eine Seitenwand (38), die sich dahingehend erstreckt, eine Fläche des Montageabschnitts (31) zu kreuzen, die dem Verbindungsabschnitt (33) im Wesentlichen zugewandt ist, an dem Verbindungsabschnitt (33) gebildet ist.

9. Fahrzeugseitiger Verbinder nach Anspruch 8, wobei der Wasserabflussweg (41) durch eine vordere Fläche bzw. Oberfläche (31 A) des Montageabschnitts (31), eine hintere Endfläche bzw. -oberfläche der Schutzwand (38) und eine äußere Fläche bzw. Oberfläche der Aufnahme (33) definiert ist.

10. Fahrzeugseitiger Verbinder nach Anspruch 8 oder 9, wobei der Wasserabflussweg (41) im Wesentlichen über die gesamte Höhe der Schutzwand (38) gebildet ist.

11. Fahrzeugseitiger Verbinder nach einem der vorhergehenden Ansprüche, wobei eine Tiefe der Aussparung (40) so festgelegt ist, dass sie im Wesentlichen gleich einer Vorsprungsdistanz des Eingriffsabschnitts (36) von dem distalen Ende der Aufnahme (33) ist, und/oder wobei sich eine untere Fläche bzw. Oberfläche (40A) der Aussparung (40) an solch einer Position befindet, dass ein distales Ende eines Spitzenabschnitts (L1) eines Verriegelungsabschnitts (L), der an dem Ladeverbinder bereitgestellt ist, im Wesentlichen damit in Kontakt kommt.

12. Fahrzeugseitiger Verbinder nach einem der vorhergehenden Ansprüche, wobei zumindest eine Positionierungsaussparung (39), die radial nach außen ragt, an dem Verbindungsabschnitt (33), insbesondere in einer Position im Wesentlichen gegenüberliegend bzw. entgegengesetzt zu derjenigen der Aussparung (40) und/der des Eingriffsabschnitts (36) bereitgestellt ist.

## Revendications

1. Connecteur côté véhicule (10) devant être connecté à un connecteur de chargement pour charger une batterie d'un véhicule (B), comprenant :
une portion de connexion (33) qui peut être connectée au connecteur de chargement ;
une portion de montage (31) qui est prévue pour diviser entre la portion de connexion (33) et le véhicule (B) et devant être fixée au véhicule (B) ;
un retrait (40); et
au moins un trajet de drainage d'eau (41) qui est formé dans une surface interne du retrait (40) sans pénétrer à travers la portion de montage (31),
**caractérisé en ce que** le retrait (40) est ouvert vers l'extérieur et vers le haut, et est prévu sur ou près du dessus de la portion de connexion (33).

2. Connecteur côté véhicule selon la revendication 1, dans lequel une pluralité de trajets de drainage d'eau (41) sont prévus.

3. Connecteur côté véhicule selon l'une quelconque des revendications précédentes, dans lequel une paire de parois latérales (38) s'étendant pour croiser une surface de la portion de montage (31) essentiellement tournée vers la portion de connexion (33) sont formées sur la portion de connexion (33), notamment sur le dessus de celle-ci.

4. Connecteur côté véhicule selon la revendication 3, dans lequel des surfaces des deux parois latérales (38) essentiellement tournées l'une vers l'autre sont respectivement des surfaces internes du retrait (40).

5. Connecteur côté véhicule selon la revendication 3 ou 4, dans lequel les trajets de drainage d'eau (41) sont respectivement formés à des extrémités des parois latérales (38) essentiellement tournées vers la portion de montage (31).

6. Connecteur côté véhicule selon l'une quelconque des revendications précédentes 4 à 6, dans lequel la portion de connexion (33) est formée d'une portion d'engagement (36) qui est située entre la paire de parois latérales (38) et pouvant être engagée avec une portion de verrou (L) prévue sur le connecteur de chargement dans une direction de connexion, et fait saillie depuis la surface supérieure ou externe de la portion de connexion (33).

7. Connecteur côté véhicule selon la revendication 6, dans lequel la surface inférieure du retrait (40) est agencée à une position telle que la portion de verrou (L) vient en contact avec celle-ci lorsque la portion de verrou (L) et la portion d'engagement (36) sont engagées ; et/ou
au moins une rainure en retrait (42) légèrement inférieure à la surface inférieure du retrait (40) est formée au niveau ou près des trajets de drainage d'eau (41) et d'une extrémité du retrait (40) particulièrement essentiellement tournée vers la portion de montage (31).

8. Connecteur côté véhicule selon l'une quelconque des revendications précédentes, dans lequel au moins une paroi latérale (38) s'étendant pour croiser une surface de la portion de montage (31) essentiellement tournée vers la portion de connexion (33) est formée sur la portion de connexion (33).

9. Connecteur côté véhicule selon la revendication 8, dans lequel le trajet de drainage d'eau (41) est défini par une surface avant (31 A) de la portion de montage (31), une surface d'extrémité arrière de la paroi de protection (38) et une surface externe du connecteur femelle (33).

10. Connecteur côté véhicule selon la revendication 8 ou 9, dans lequel le trajet de drainage d'eau (41) est formé essentiellement sur la hauteur entière de la paroi de protection (38).

11. Connecteur côté véhicule selon l'une quelconque des revendications précédentes, dans lequel une profondeur du retrait (40) est réglée pour être essentiellement égale à une distance de saillie de la portion d'engagement (36) depuis l'extrémité distale du connecteur femelle (33), et/ou dans lequel une surface inférieure (40A) du retrait (40) est située à une position telle qu'une extrémité distale d'une portion de pointe (L1) d'une portion de verrou (L) prévue sur le connecteur de chargement vient essentiellement en contact avec elle.

12. Connecteur côté véhicule selon l'une quelconque des revendications précédentes, dans lequel au moins un retrait de positionnement (39) faisant radialement saillie vers l'extérieur est prévu au niveau de la portion de connexion (33), notamment dans une position essentiellement à l'opposé de celle du retrait (40) et/ou de la portion d'engagement (36).
